(19) Europäisches Patentamt
European Patent Office
Office européen des brevets

(11) **EP 2 981 117 B1**

(12) **EUROPEAN PATENT SPECIFICATION**

(45) Date of publication and mention of the grant of the patent:
**15.11.2017 Bulletin 2017/46**

(21) Application number: **13882434.7**

(22) Date of filing: **19.04.2013**

(51) Int Cl.:
*H04W 16/14* (2009.01)     *H04W 72/12* (2009.01)

(86) International application number:
**PCT/CN2013/074468**

(87) International publication number:
**WO 2014/169488 (23.10.2014 Gazette 2014/43)**

(54) **INTERFERENCE COORDINATION METHOD AND APPARATUS FOR SYSTEMS WITH DIFFERENT MODES**

INTERFERENZKOORDINATIONSVERFAHREN UND GERÄT FÜR SYSTEME MIT VERSCHIEDENEN BETRIEBSARTEN

PROCÉDÉ DE COORDINATION DE BROUILLAGE ET APPAREIL POUR SYSTÈMES PRÉSENTANT DIFFÉRENTS MODES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.02.2016 Bulletin 2016/05**

(73) Proprietor: **Huawei Technologies Co., Ltd.
Longgang District
Shenzhen, Guangdong 518129 (CN)**

(72) Inventors:
• **DENG, Tianle
Shenzhen
Guangdong 518129 (CN)**
• **LUO, Haiyan
Shenzhen
Guangdong 518129 (CN)**
• **CHEN, Xiao
Shenzhen
Guangdong 518129 (CN)**

(74) Representative: **Epping - Hermann - Fischer
Patentanwaltsgesellschaft mbH
Schloßschmidstraße 5
80639 München (DE)**

(56) References cited:
WO-A1-2013/025158     CN-A- 101 657 976
CN-A- 101 977 388     CN-A- 101 977 388
CN-A- 102 118 758     US-A1- 2009 257 390

**Description**

**TECHNICAL FIELD**

The present invention relates to the field of communications, and in particular, to a method and an apparatus for interference coordination in an inter-radio access technology (Radio Access Technology, RAT) system.

**BACKGROUND**

With fast development of data services, users have increasing requirements for wireless spectrum resources, wireless spectrum resources are increasingly limited, and scarcity of wireless spectrum resources becomes increasingly obvious. Therefore, how to properly plan and effectively use wireless spectrum resources becomes a critical problem.

According to definitions of wireless communications frequency bands in 3GPP standards, 900MHz and 1800MHz frequency bands are mainly used in a GSM network currently. With gradual popularity of 3G services and migration of users, 3G services are mainly carried on a 2.1GHz frequency band, and voice network load originally carried on both GSM900 and GSM1800 is reduced gradually. Therefore, spectrums of GSM900 and GSM1800 may be refarmed gradually, and used in a UMTS/LTE network that is more advanced and has higher spectrum efficiency. Spectrum refarming (Spectrum Refarming) is a better choice for maintaining network competitiveness, reducing an investment, and rapidly deploying an LTE network. However, because GSM users maintain a high permeability for a very long time in a development process of the LTE network, and capacity requirements of GSM users gradually change, spectrum refarming relates to great network actions, such as necessary re-planning and cell restart. Consequently, spectrum refarming is needed frequently, and a cost is very high. Therefore, within a time range, as a transitional process before spectrum refarming, dynamic spectrum sharing between the GSM network and the UMTS/LTE network (GU/GL) is significant. However, there is a critical problem in the spectrum sharing solution, that is, in a case of spectrum sharing, how to reduce intra-frequency or inter-frequency interference between the GSM network and the UMTS/LTE network. To describe this problem, the following first uses spectrum sharing between the GSM network and the LTE network as an example to describe the intra-frequency or inter-frequency interference between the GSM network and the UMTS/LTE network in the case of spectrum sharing.

A spacing between GSM frequency channel numbers is 200kHz. Each Time Division Multiple Access (Time Division Multiple Access, TDMA) frame on a frequency channel number includes eight timeslots (which are respectively TS0, TS1, ..., TS7), and a length of each timeslot is 0.557ms. When the GSM network occupies more than one frequency channel number, which is assumed to be $C_0$, $C_1$, ..., $C_N$, TS0 of the frequency channel number Co is mainly used for a broadcast channel and a common control channel, TS1 of Co is mainly used for a dedicated control channel, and TS2 to TS7 of the frequency channel number Co and TS0 to TS7 of other frequency channel numbers are mainly used for a traffic channel. When the GSM network occupies only one frequency channel number, TS0 of Co is mainly used for a broadcast channel, a common control channel, and a dedicated control channel, and remaining TS1 to TS7 are used for a traffic channel. When a granularity of scheduling and allocation in the LTE network is a physical resource block (Physical Resource Block, PRB) pair, 1ms is occupied in a time domain, and 12 subcarriers with a total of 180kHz are occupied in a frequency domain. A base station in the GSM network has a very high transmit power, and a carrier (with a bandwidth of 200kHz) has a power of 20W However, a base station in the LTE network has a relatively low transmit power, for example, a transmit power in a bandwidth of 10MHz is 40W, and an average transmit power of RBs (180kHz) is 0.8W/180kHz, which is far lower than the transmit power of the base station in the GSM network on a unit hertz. Therefore, when the LTE network and the GSM network are deployed in a spectrum sharing manner, a signal transmitted with a high power by a GSM cell severely interferes with a signal of an LTE cell. This indicates that how to coordinate interference between the GSM cell and the LTE cell and ensure reliability of an inter-radio access technology (Radio Access Technology, RAT) system in a case of spectrum sharing is a major problem of the inter-RAT system in the case of spectrum sharing.

In view of the foregoing technical problem, a solution provided by the prior art is: for different networks, allocating different carrier resources, and doing so even in a case of spectrum sharing. For example, in the case of spectrum sharing, a carrier resource allocated to the GSM network is not allocated to the LTE network for use, so that interference from the GSM network to the LTE network is avoided.

Document CN 101 977 388 A describes a method for controlling an uplink interference signal using the following steps: initiating an uplink service on a first standard communication system, judging whether the uplink service can use a shared spectrum resource of the first and a second standard communication system, first and second system differing from each other, if the judging proves positive, the first communication system predicts time and frequency of an uplink interference signal on shared spectrum resources and sends this information to the second communication system, so that the second communication system controls the uplink interference signal by employing a notch filter.

Although the prior art solves the problem of intra-frequency or inter-frequency interference to some extent, determining, merely according to whether the GSM network uses the carrier, whether the LTE network can use the carrier, not only departs from an original purpose of spectrum sharing, but also severely constrains a range of resources that can be used by the GSM network. In other words, the prior art reduces interference at the cost of sacrificing a spectrum to some extent, and this is unfavorable for improving utilization efficiency of spectrum sharing.

## SUMMARY

Embodiments of the present invention provide a method and an apparatus for interference coordination in an inter-RAT system to improve utilization of wireless spectrum resources while eliminating intra-frequency interference.

According to a first aspect, an embodiment of the present invention provides a method for interference coordination in an inter-RAT system, where the method includes: acquiring information about a time-frequency resource of a first cell and information about an interference relationship between the first cell and a second cell, where the information about the interference relationship between the first cell and the second cell is used to determine interference imposed on the second cell by the first cell on a time-frequency, and the first cell and the second cell are cells of different RATs; and

determining information about a time-frequency resource of the second cell according to the information about the time-frequency resource of the first cell and the information about the interference relationship, where the information about the time-frequency resource of the second cell is used by the second cell to schedule a time-frequency resource. Therein, the information about the time-frequency resource of the second cell is specifically used to instruct the second cell to use a first carrier of the second cell to schedule a second carrier of the second cell in a cross-carrier manner, where the second carrier includes a time-frequency resource shared by the first cell and the second cell.

Based on the first aspect, in a first possible implementation manner of the first aspect, the acquiring information about a time-frequency resource of a first cell includes: receiving the information about the time-frequency resource of the first cell, where the information about the time-frequency resource of the first cell is sent by a base station of the first cell.

Based on the first aspect, in a second possible implementation manner of the first aspect, the acquiring information about an interference relationship between the first cell and the second cell includes:

receiving the information about the interference relationship, where the information about the interference relationship is sent by a base station of the second cell.

Based on the first aspect or the first or second possible implementation manner of the first aspect, in a third possible implementation manner of the first aspect, the information about the time-frequency resource of the first cell includes at least any piece of information about a carrier of the first cell, information about a power of the carrier, information about a timeslot, and information about a power in the timeslot.

Based on the first aspect or the first or second possible implementation manner of the first aspect, in a fourth possible implementation manner of the first aspect, the information about the interference relationship between the first cell and the second cell includes at least information about the interference imposed on the second cell by the first cell.

Based on the first aspect or the first or second possible implementation manner of the first aspect, in a fifth possible implementation manner of the first aspect, the determining information about a time-frequency resource of the second cell according to the information about the time-frequency resource of the first cell and the information about the interference relationship includes:

determining an available time-frequency resource or an unavailable time-frequency resource of the second cell or information about strength of interference imposed on the time-frequency resource of the second cell.

Based on the first aspect, in a seventh possible implementation manner of the first aspect, the method further includes:

sending the information about the time-frequency resource of the second cell to a base station of the second cell.

According to a second aspect, an embodiment of the present invention provides an apparatus for interference coordination in an inter-RAT system, where the apparatus includes: an acquiring module, configured to acquire information about a time-frequency resource of a first cell and information about an interference relationship between the first cell and a second cell, where the information about the interference relationship between the first cell and the second cell is used to determine interference imposed on the second cell by the first cell on a time-frequency, and the first cell and the second cell are cells of different RATs; and

a determining module, configured to determine information about a time-frequency resource of the second cell according to the information about the time-frequency resource of the first cell and the information about the interference relationship, where the information about the time-frequency resource of the second cell is used by the second cell to schedule a time-frequency resource. Therein, the information about the time-frequency resource of the second cell is specifically used to instruct the second cell to use a first carrier of the second cell to schedule a second carrier of the second cell in a cross-carrier manner, where the second carrier includes a time-frequency resource shared by the first cell and the second cell.

Based on the second aspect, in a first possible implementation manner of the second aspect, the acquiring module includes:

a first receiving unit, configured to receive the information about the time-frequency resource of the first cell, where the information about the time-frequency resource of the first cell is sent by a base station of the first cell. Based on the second aspect, in a second possible implementation manner of the second aspect, the acquiring module includes:

a second receiving unit, configured to receive the information about the interference relationship, where the information about the interference relationship is sent by a base station of the second cell.

Based on the second aspect or the first or second possible implementation manner of the second aspect, in a third possible implementation manner of the second aspect, the information about the time-frequency resource of the first cell includes at least any piece of information about a carrier of the first cell, information about a power of the carrier, information about a timeslot, and information about a power in the timeslot. Based on the second aspect or the first or second possible implementation manner of the second aspect, in a fourth possible implementation manner of the second aspect,

the information about the interference relationship between the first cell and the second cell includes at least information about the interference imposed on the second cell by the first cell.

Based on the second aspect or the first or second possible implementation manner of the second aspect, in a fifth possible implementation manner of the second aspect, the first determining module is specifically configured to determine an available time-frequency resource or an unavailable time-frequency resource of the second cell or information about strength of interference imposed on the time-frequency resource of the second cell.
Based on the second aspect, in a seventh possible implementation manner of the second aspect, the apparatus further includes:

a sending module, configured to send the information about the time-frequency resource of the second cell to a base station of the second cell.

As may be known from the foregoing embodiments of the present invention, a base station of a second cell determines, according to information about a time-frequency resource of a first cell and information about an interference relationship between the first cell and the second cell, information about a time-frequency resource of the second cell, where the information about the time-frequency resource of the second cell is used by the second cell to schedule a time-frequency resource. Therefore, compared with the method provided by the prior art in which different carrier resources are allocated for different networks, the method provided by the embodiments of the present invention may eliminate intra-frequency interference from a GSM system to an LTE system and improve utilization of wireless spectrum resources, and can achieve an objective of rapid LTE deployment through spectrum refarming.

**BRIEF DESCRIPTION OF DRAWINGS**

To describe the technical solutions in the embodiments of the present invention more clearly, the following briefly introduces the accompanying drawings required for describing the prior art or the embodiments. Apparently, the accompanying drawings in the following description show merely some embodiments of the present invention, and a person skilled in the art may still derive other drawings from these accompanying drawings.

FIG. 1 is a schematic flowchart of a method for interference coordination in an inter-RAT system according to an embodiment of the present invention;
FIG. 2 is a schematic diagram of network planning of second cells of an LTE RAT and first cells of a GSM RAT according to an embodiment of the present invention;

FIG. 3 is a schematic diagram of a carrier occupied by each cell in second cells according to an embodiment of the present invention;

FIG. 4 is a schematic structural diagram of an apparatus for interference coordination in an inter-RAT system according to an embodiment of the present invention;

FIG. 5 is a schematic structural diagram of an apparatus for interference coordination in an inter-RAT system according to another embodiment of the present invention;

FIG. 6 is a schematic structural diagram of an apparatus for interference coordination in an inter-RAT system according to another embodiment of the present invention; and

FIG. 7 is a schematic structural diagram of an apparatus for interference coordination in an inter-RAT system according to another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person skilled in the art based on the embodiments of the present invention shall fall within the protection scope of the present invention.

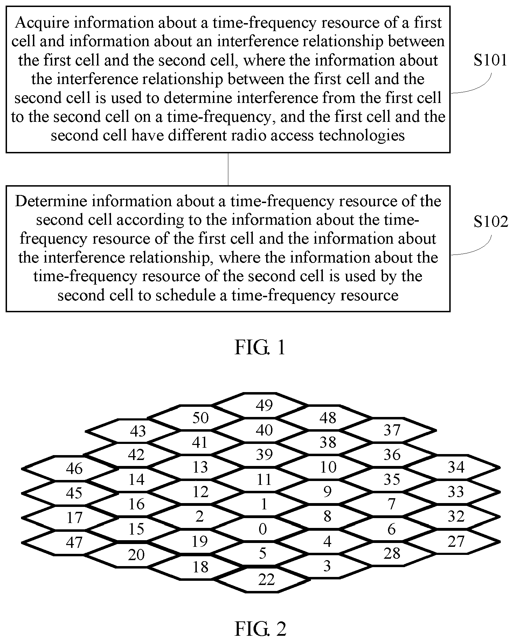

Referring to FIG. 1, FIG. 1 is a schematic flowchart of a method for interference coordination in an inter-RAT system according to an embodiment of the present invention. The method may be executed by a central node that jointly manages network services of two cells of different RATs, for example, a multi-standard controller that jointly manages GSM and LTE network services, or may be executed by a base station device in one of two cells of different RATs, for example, a base station device in a cell of LTE. The method illustrated in FIG. 1 mainly includes step S101 and step S102, which are described in detail in the following.

S101. Acquire information about a time-frequency resource of a first cell and information about an interference relationship between the first cell and the second cell, where the information about the interference relationship between the first cell and the second cell is used to determine interference imposed on the second cell by the first cell on a time-frequency, and the first cell and the second cell are cells of different RATs.

In the embodiment of the present invention, the first cell may be a cell of GSM, and the second cell may be a cell of LTE. In an embodiment of acquiring the information about the time-frequency resource of the first cell, the information about the time-frequency resource of the first cell may be acquired passively, that is, a multi-standard controller receives the information that is about the time-frequency resource of the first cell and sent by a base station of the first cell, or the information about the time-frequency resource of the first cell may be acquired actively, that is, a multi-standard controller sends, to a base station of the first cell, a request message for requesting reporting of the information about the time-frequency resource of the first cell, and after receiving the request message, the base station of the first cell returns the information about the time-frequency resource of the first cell to the multi-system controller. In another embodiment of acquiring the information about the time-frequency resource of the first cell, a base station of the second cell may receive the information that is about the time-frequency resource of the first cell and sent by a base station of the first cell, or a base station of the second cell sends, to a base station of the first cell, a request message for requesting reporting of the information about the time-frequency resource of the first cell, and after receiving the request message, the base station of the first cell returns the information about the time-frequency resource of the first cell to the base station of the second cell.

Similarly, acquiring the information about the interference relationship between the first cell and the second cell may also include passive acquiring and active acquiring. The passive acquiring includes: the multi-standard controller receives the information that is about the interference relationship between the first cell and the second cell and sent by the base station of the second cell. The active acquiring includes: the multi-standard controller sends, to the base station of the second cell, a request message for requesting reporting of the information about the interference relationship between the first cell and the second cell, and after receiving the request message, the base station of the second cell returns the information about the interference relationship between the first cell and the second cell to the multi-system controller. Acquiring the information about the interference relationship between the first cell and the second cell may be completed by performing two steps: preliminarily determining the information about the interference relationship, and precisely determining the information about the interference relationship. The preliminarily determined information about the interference relationship may be obtained according to network planning data or drive test data. FIG. 2 shows a diagram of network planning of second cells of the LTE RAT and first cells of the GSM RAT. A coverage area 1 is a coverage area of a cell 1 in the second cells (namely, the cells of the LTE RAT) and a cell 1 in the first cells (namely, the cells of the GSM RAT), and other numbers represent coverage areas of the second cells and the first cells. A second cell not only is interfered by an intra-frequency second cell, but also is interfered by intra-frequency first cells with different strength. A first cell generating strong interference includes a first cell numbered {1}, with measured signal strength of [-30dBm, -70dBm]. First cells generating secondary strong interference include first cells numbered {4, 7, 10, 13, 16, 19, and 22}, with measured signal strength of [-85dBm, -95dBm]. First cells generating weak interference include first cells numbered {27, 34, 37, 40, 43, 46, and 47}, with measured signal strength of [-100dim, -110dBm]. The information about the interference relationship between the first cell and the second cell may also be determined preliminarily on a basis of geographical location information. Specifically, FIG. 2 is still used as an example, and the multi-standard controller acquires geographical location information of the second cells and each first cell according to the network planning data. For example, geographical locations of the cell 1 in the first cells and the cell 1 in the second cells are the same, and therefore it is considered that the cell 1 in the first cells is a strong interference source cell for the second cells; distances from the cells numbered 4, 7, 10, 13, 16, 19, and 22 in the first cells to the second cells are the same or appropriately the same, for example, 500m, and therefore it is considered that the cells numbered 4, 7, 10, 13, 16, 19, and 22 in the first cells are secondary strong interference source cells for the second cells; distances from the cells numbered 27, 34, 37, 40, 43, 46, and 47 in the first cells to the second cells are the same or appropriately the same, for example, 1000m, and therefore it is considered that the cells numbered 27, 34, 37, 40, 43, 46, and 47 in the first cells are weak interference source cells for the second cells. Results of qualitative analyses on the foregoing strong interference, secondary strong interference, or weak interference may be used as information about interference imposed on the second cells by the first cells.

It should be noted that the preliminarily determined information about the interference relationship between the first cell and the second cell may also be acquired by the second cell by means of terminal measurement (which may be inter-frequency measurement in the inter-RAT system, or may be intra-frequency measurement in the inter-RAT system, depending on whether frequency channel numbers used by the first cell and the second cell are the same), and then the base station of the second cell sends the acquired information about the interference relationship between the first cell and the second cell to the multi-system controller, so that the multi-standard controller acquires the relationship of the interference imposed on the second cell by the first cell. For example, by means of terminal measurement, the second cells know that the cell 1 in the second cells not only is interfered by intra-frequency second cells, but also is interfered by intra-frequency first cells with different strength. The first cell generating strong interference includes the first cell numbered {1}, with measured signal strength of [-30dBm, -70dBm]. The first cells generating secondary strong interference include the first cells numbered {4, 7, 10, 13, 16, 19, and 22}, with measured signal strength of [-85dBm, -95dBm]. The first cells generating weak interference include the first cells numbered {27, 34, 37, 40, 43, 46, and 47}, with measured signal strength of [-100dBm, -110dBm].

S102. Determine information about a time-frequency resource of the second cell according to the information about the time-frequency resource of the first cell and the information about the interference relationship, where the information about the time-frequency resource of the second cell is used by the second cell to schedule a time-frequency resource.

In the embodiment of the present invention, the information about the time-frequency resource of the first cell includes at least any piece of information about a carrier of the first cell, information about a power of the carrier, information about a timeslot, and information about a power in the timeslot. For example, according to a change of a service of a G-only user, the base station of the first cell correspondingly adds or reduces the quantity of GSM service carrier, or adjusts a power value of a carrier, and the base station of the first cell may send the information about the carrier of the first cell and/or the information about the power of the carrier to the base station of the second cell or the multi-system controller. When information about timeslot allocation of the first cell and the power in the timeslot change because of the service change, the base station of the first cell may also send the information about the timeslot and the information about the power in the timeslot, as the information about the time-frequency resource of the first cell, to the base station of the second cell or the multi-system controller.

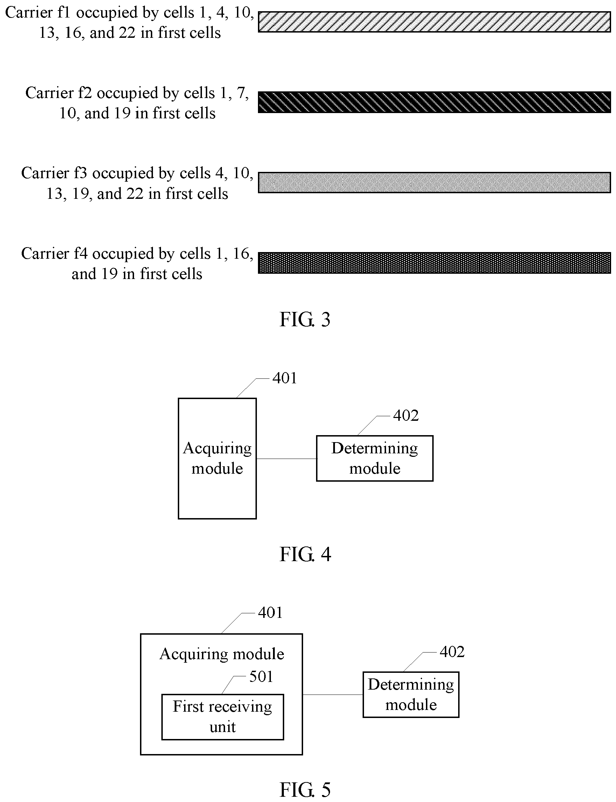

As mentioned above, acquiring the information about the interference relationship between the first cell and the second cell includes preliminarily determining the information about the interference relationship, and precisely determining the information about the interference relationship. When the information about the interference relationship is determined preliminarily, it is optional that only the strong interference source cells and secondary strong interference source cells are considered, or only interference source cells in which measured signal strength is greater than a threshold are considered. In this example, only the strong interference source cells and secondary strong interference source cells are considered. Through summarization, the multi-standard controller obtains occupancy of a carrier by each cell in the second cells shown in FIG. 3.

A method 1 for precisely determining the information about the interference relationship between the first cell and the second cell is obtaining a path loss coefficient based on the geographical locations of the first cell and the second cell, and obtaining the information about the interference relationship between the first cell and the second cell with reference to the information about the carrier and/or the information about the power of the carrier in the first cell. Specifically, assuming that distances from GSM cells 1, ..., N to an LTE cell are d1, ..., dN respectively, and that transmit powers are p1, ..., pN respectively, strength of interference that may be imposed on the LTE cell on $f_1$ may be expressed by using the following formula:

$$I(f_i) = \sum_{j=1}^{N} A_j(f_i) p_j L_j$$

$$(1)$$

where, $A_j(f_i)$ indicates occupancy of a carrier fi by a cell numbered j in the first cells. If the first cell j occupies the carrier fi, $A_j(f_i) = 1$; otherwise, $A_j(f_i) = 0$. $L_j$ indicates a path loss from the first cell numbered j to the second cell, and the path loss may be estimated appropriately according to the distance between the two cells, for example, $L_j = d_j^{-\alpha}$, where $\alpha$ is a path loss coefficient, ranging from -2 to -4. According to the foregoing description, if only the cell numbered 1 in the first cells, namely, the strong interference source cell, is considered, and only the cells numbered 4, 7, 10, 13, 16, 19, and 22 in the first cells, namely, the secondary strong interference source cells, are considered, strength of interference to the second cell on f1, f2, f3, and f4 is respectively as follows:

$$I(f_1) = p_1 L_1 + p_4 L_4 + p_{10} L_{10} + p_{13} L_{13} + p_{16} L_{16} + p_{22} L_{22}$$

$$I(f_2) = p_1 L_1 + p_7 L_7 + p_{10} L_{10} + p_{19} L_{19}$$

$$I(f_3) = p_4 L_4 + p_{10} L_{10} + p_{13} L_{13} + p_{19} L_{19} + p_{22} L_{22}$$

$$I(f_4) = p_1 L_1 + p_{16} L_{16} + p_{19} L_{19} \, .$$

According to the method in the foregoing example, the strength of interference to the second cell on each carrier may be determined finally.

A method 2 for precisely determining the information about the interference relationship between the first cell and the second cell is obtaining a path loss coefficient based on the geographical locations of the first cell and the second cell, and setting weights for interference source cells of different interference strength with reference to the information about the carrier and/or the information about the power of the carrier in the first cell. When only the strong interference source cells and the secondary strong interference source cells are considered, different weights are assigned to the strong interference source cells and the secondary strong interference source cells. For example, a weight of the cell numbered 1 in the first cells is 0.3, and all weights of the cells numbered 4, 7, 10, 13, 16, 19, and 22 are 0.1 (certainly, the coefficients may vary according to actual situations), and therefore strength of interference that may be imposed on the second cell on $f_1$ may be expressed by using the following formula:

$$I(f_i) = \sum_{j=1}^{N} A_j(f_i) p_j \eta_j$$

$$(2)$$

where, $\eta_j$ is a weight of the GSM cell j, and the strength of interference to the second cell on each carrier may be determined finally.

In the foregoing method 1 and method 2, when only the information about the carrier of the first cell is received, formula (1) and formula (2) may be simplified as follows:

$$I(f_i) = \sum_{j=1}^{N} A_j(f_i) p_j L_j \qquad \underline{\qquad\qquad} > \qquad I(f_i) = \sum_{j=1}^{N} A_j(f_i) L_j$$

$$I(f_i) = \sum_{j=1}^{N} A_j(f_i) p_j \eta_j \qquad \underline{\qquad\qquad} > \qquad I(f_i) = \sum_{j=1}^{N} A_j(f_i) \eta_j \, .$$

A method 3 for precisely determining the information about the interference relationship between the first cell and the second cell is obtaining a path loss coefficient based on the geographical locations of the first cell and the second cell, and calculating, with reference to the information about the timeslot and/or the information about the power in the timeslot in the first cell and according to the following formula (3), strength of interference imposed on the second cell by the firs cell on the time-frequency resource (particular carrier and particular timeslot).

$$I(f_i, slot_k) = \sum_{j=1}^{N} A_j(f_i, k) p_j(i, k) L_j$$

$$(3)$$

where, $I(f_i, slot_k)$ indicates strength of interference imposed to the second cell by the first cell in a timeslot K on a carrier fi, $p_j(i,k)$ indicates a transmit power of the cell j in the timeslot k on the carrier fi, and $A_j(f_i, k) = 1$ indicates that the cell j occupies the timeslot k on the carrier i, or $Aj(fi, k) = 0$ indicates that the cell j does not occupy the timeslot k on the carrier i.

When the acquired information about time-frequency resource of the first cell is the information about the carrier of the first cell, the information about the power of the carrier, and the information about the timeslot, and the information about the interference relationship is information about received signal strength obtained by means of terminal measurement, strength of interference imposed on the second cell by the first cell on the time-frequency resource (particular carrier and particular timeslot) may be calculated by using the following formula (4).

$$I(f_i, slot_k) = \sum_{j=1}^{N} A_j(f_i, k) p_j(i, k) \eta_j$$

$$(4)$$

When the acquired information about the time-frequency resource of the first cell is the information about the timeslot and the information about the transmit power, and the information about the interference relationship is information about a path loss obtained according to the geographical location information, strength of interference imposed on the second cell by the first cell on the time-frequency resource (particular timeslot) may be calculated by using the following formula (5).

$$I(slot_k) = \sum_{j=1}^{N} C_j(k) p_j(k) L_j$$

$$(5)$$

where, $C_j(k) = 1$ indicates that the cell $j$ occupies the timeslot $k$, or $C_j(k) = 0$ indicates that the cell $j$ does not occupy the timeslot k; $p_j(k)$ indicates a transmit power of the cell numbered $j$ in the first cells, in the timeslot $k$, that is, by default, transmit powers of the first cell $j$ on all carriers are the same.

When the acquired information about time-frequency resource of the first cell is the information about the timeslot and the information about the transmit power, and the information about the interference relationship is information about received signal strength obtained by means of terminal measurement, strength of interference imposed on the second cell by the first cell on the time-frequency resource (particular timeslot) may be calculated by using the following formula (6).

$$I(slot_k) = \sum_{j=1}^{N} C_j(k) p_j(k) \eta_j$$

$$(6)$$

When the acquired information about time-frequency resource of the first cell is the information about the timeslot, and the information about the interference relationship is information about a path loss obtained according to the geographical location information, strength of interference imposed on the second cell by the first cell on the time-frequency resource (particular timeslot) may be calculated by using the following formula (7).

$$I(slot_k) = \sum_{j=1}^{N} C_j(k) L_j$$

$$(7)$$

When the acquired information about time-frequency resource of the first cell is the information about the timeslot, and the information about the interference relationship is information about received signal strength obtained by means of user equipment (user equipment, UE) measurement, strength of interference imposed on the second cell by the first cell on the time-frequency resource (particular timeslot) may be calculated by using the following formula (8).

$$I(slot_k) = \sum_{j=1}^{N} C_j(k) \eta_j$$

$$(8)$$

After the information about the interference relationship is calculated according to the foregoing method, because the carrier of the first cell has a correspondence with a resource block (Resource Block, RB) of the second cell, the multi-standard controller may determine the information about the time-frequency resource of the second cell accordingly, which specifically includes determining an available time-frequency resource or an unavailable time-frequency resource of the second cell or information about strength of interference imposed on the time-frequency resource of the second cell. For example, when an RB that is correspondingly interfered in the second cell is obtained according to a carrier generating interference, an available time-frequency resource of the second cell, namely, an RB that is not interfered, may be determined accordingly. The multi-standard controller may send the information about the time-frequency resource of the second cell to the base station of the second cell, so that the second cell uses the information about the time-frequency resource of the second cell to schedule a time-frequency resource. For example, the interfered RB is avoided during scheduling, or lower-order scheduling is performed. When the information about the time-frequency resource of the second cell is being sent, the information about the time-frequency resource of the second cell and the information about the strength of the interference to the second cell may be sent to the base station of the second cell, where the information about the strength of the interference may be quantitative information obtained through calculation according to the foregoing formula, or may be qualitative information that is obtained through comparison with the threshold after a piece of quantitative information is calculated according to the foregoing formula, for example, strong interference and secondary strong interference. In an embodiment corresponding to the foregoing embodiment, assuming that the second cell is strongly interfered on resource blocks numbered RB4, RB5, and RB29 and corresponding timeslots SFN0 to SFN40, and that the second cell is secondarily strongly interfered on resource blocks numbered RB30, RB14, and RB46, and corresponding timeslots SFN12 to SFN54, the multi-standard controller may send the information about the time-frequency resource of the second cell in forms of {SFN0 to SFN40, RB4, RB5, RB29, strong interference} and {SFN12 to SFN54, RB30, RB14, RB46, secondary strong interference} to the base station of the second cell.

In particular, that the information about the time-frequency resource of the second cell is used by the second cell to schedule a time-frequency resource may be that the information about the time-frequency resource of the second cell is specifically used to instruct the second cell to use a first carrier of the second cell to schedule a second carrier of the second cell in a cross-carrier manner, where the second carrier includes a time-frequency resource shared by the first cell and the second cell.

The prior art does not consider that a GSM spectrum itself is reused according to a reuse distance between neighboring cells, but the reuse itself causes a great difference in interference to an LTE system when a carrier is used by different cells. As may be known from the foregoing method for interference coordination in an inter-RAT system according to the embodiment of the present invention, a base station of a second cell determines, according to information about a time-frequency resource of a first cell and information about an interference relationship between the first cell and the second cell, information about a time-frequency resource of the second cell, where the information about the time-frequency resource of the second cell is used by the second cell to schedule a time-frequency resource. Therefore, compared with the method provided by the prior art in which different carrier resources are allocated for different networks, the method provided by the embodiment of the present invention may eliminate intra-frequency interference from a GSM system to an LTE system and improve utilization of wireless spectrum resources, and can achieve an objective of rapid LTE deployment through spectrum refarming.

Referring to FIG. 4, FIG. 4 is a schematic structural diagram of an apparatus for interference coordination in an inter-RAT system according to an embodiment of the present invention. For ease of description, only the parts related to the embodiment of the present invention are illustrated. The apparatus for interference coordination in an inter-RAT system illustrated in FIG. 4 may be a multi-standard controller, or a network-side device in a cell of LTE, for example, a base station, or may be a functional module of the foregoing multi-standard controller or base station. The apparatus includes an acquiring module 401 and a determining module 402.

The acquiring module 401 is configured to acquire information about a time-frequency resource of a first cell and information about an interference relationship between the first cell and the second cell, where the information about the interference relationship between the first cell and the second cell is used to determine interference imposed on the second cell by the first cell on a time-frequency, and the first cell and the second cell are cells of different RATs.

The determining module 402 is configured to determine information about a time-frequency resource of the second cell according to the information about the time-frequency resource of the first cell and the information about the interference relationship, where the information about the time-frequency resource of the second cell is used by the second cell to schedule a time-frequency resource.

It should be noted that, in an implementation manner of the apparatus for interference coordination in an inter-RAT system illustrated in FIG. 4, division of functional modules is exemplary only. In an actual application, depending on requirements such as corresponding hardware configuration requirements or software implementation convenience, the foregoing functions may be allocated to different functional modules and implemented by those modules, namely, an internal structure of the apparatus for interference coordination in an inter-RAT system is divided into different functional modules to implement some or all of the functions described above. In addition, in an actual application, the corresponding functional modules in this embodiment may be implemented by corresponding hardware, or may be implemented by corresponding software executed by corresponding hardware. For example, the foregoing acquiring module may be hardware that can execute the step of acquiring information about a time-frequency resource of a first cell and information about an interference relationship between the first cell and the second cell, for example, an acquirer, or may be an ordinary processor or any other hardware device that can execute a corresponding computer program to complete the foregoing functions. For another example, the foregoing determining module may be hardware that can execute the step of determining information about a time-frequency resource of the second cell according to the information about the time-frequency resource of the first cell and the information about the interference relationship, for example, a determining device, or may be an ordinary processor or any other hardware device that can execute a corresponding computer program to complete the foregoing functions (the foregoing description principle may be applied in each embodiment provided in the specification).

In the apparatus for interference coordination in an inter-RAT system illustrated in FIG. 4, the first cell may be a cell of GSM, and the second cell may be a cell of LTE. In an embodiment of acquiring the information about the time-frequency resource of the first cell, the information about the time-frequency resource of the first cell may be acquired passively. That is, the acquiring module 401 illustrated in FIG. 4 may further include a first receiving unit 501, as shown in FIG. 5, which shows an apparatus for interference coordination in an inter-RAT system according to another embodiment of the present invention. The first receiving unit 501 receives the information about the time-frequency resource of the first cell, where the information about the time-frequency resource of the first cell is sent by a base station of the first cell. The acquiring module 401 may also actively acquire the information about the time-frequency resource of the first cell, that is, a multi-standard controller sends, to the base station of the first cell, a request message for requesting reporting of the information about the time-frequency resource of the first cell, and after receiving the request message, the base station of the first cell returns the information about the time-frequency resource of the first cell to the multi-system controller. In another embodiment of acquiring the information about the time-frequency resource of the first cell, a base station of the second cell, namely, the cell of the LTE RAT, may receive the information that is about the time-frequency resource of the first cell and sent by the base station of the first cell, or a base station of the second cell sends, to the base station of the first cell, a request message for requesting reporting of the information about the time-frequency resource of the first cell, and after receiving the request message, the base station of the first cell returns the information about the time-frequency resource of the first cell to the base station of the second cell.

Similarly, acquiring the information about the interference relationship between the first cell and the second cell may also include passive acquiring and active acquiring.

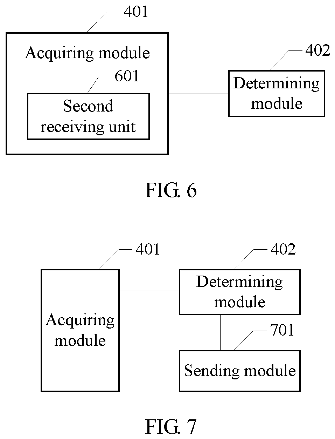

That is, the acquiring module 401 illustrated in FIG. 4 may further include a second receiving unit 601, as shown in FIG. 6, which shows an apparatus for interference coordination in an inter-RAT system according to another embodiment of the present invention. The second receiving unit 601 receives the information that is about the interference relationship between the first cell and the second cell and sent by the base station of the second cell. The active acquiring includes: the multi-standard controller sends, to the base station of the second cell, a request message for requesting reporting of the information about the interference relationship between the first cell and the second cell, and after receiving the request message, the base station of the second cell returns the information about the interference relationship between the first cell and the second cell to the multi-system controller.

In the apparatus for interference coordination in an inter-RAT system illustrated in FIG. 4 to FIG. 6, acquiring the information about the interference relationship between the first cell and the second cell may be completed by performing two steps: The acquiring module 401 preliminarily determines the information about the interference relationship, and precisely determines the information about the interference relationship. The preliminarily determined information about the interference relationship may be obtained by the acquiring module 401 according to network planning data or drive test data. FIG. 2 shows a diagram of network planning of second cells of the LTE RAT and first cells of the GSM RAT. A coverage area 1 is a coverage area of a cell 1 in the second cells (namely, the cells of the LTE RAT) and a cell 1 in the first cells (namely, the cells of the GSM RAT), and other numbers represent coverage areas of the second cells and the first cells. A second cell not only is interfered by an intra-frequency second cell, but also is interfered by intra-frequency first cells with different strength. A first cell generating strong interference includes a first cell numbered {1}, with measured signal strength of [-30dBm, -70dBm]. First cells generating secondary strong interference include first cells numbered {4, 7, 10, 13, 16, 19, and 22}, with measured signal strength of [-85dBm, -95dBm]. First cells generating weak interference include first cells numbered {27, 34, 37, 40, 43, 46, and 47}, with measured signal strength of [-100dim, -110dBm]. The information about the interference relationship between the first cell and the second cell may also be determined preliminarily on a basis of geographical location information. Specifically, FIG. 2 is still used as an example, and the acquiring module 401 acquires geographical location information of the second cells and each first cell according to the network planning data. For example, geographical locations of the cell 1 in the first cells and the cell 1 in the second cells are the same, and therefore it is considered that the cell 1 in the first cells is a strong interference source cell for the second cells; distances from the cells numbered 4, 7, 10, 13, 16, 19, and 22 in the first cells to the second cells are the same or appropriately the same, for example, 500m, and therefore it is considered that the cells numbered 4, 7, 10, 13, 16, 19, and 22 in the first cells are secondary strong interference source cells for the second cells; distances from the cells numbered 27, 34, 37, 40, 43, 46, and 47 in the first cells to the second cells are the same or appropriately the same, for example, 1000m, and therefore it is considered that the cells numbered 27, 34, 37, 40, 43, 46, and 47 in the first cells are weak interference source cells for the second cells. Results of qualitative analyses on the foregoing strong interference, secondary strong interference, or weak interference may be used as information about interference imposed on the second cells by the first cells.

It should be noted that the preliminarily determined information about the interference relationship between the first cell and the second cell may also be acquired by the second cell by means of terminal measurement (which may be inter-frequency measurement in the inter-RAT system, or may be intra-frequency measurement in the inter-RAT system, depending on whether frequencies used by the first cell and the second cell are the same), and then the base station of the second cell sends the acquired information about the interference relationship between the first cell and the second cell to the multi-system controller, so that the multi-standard controller acquires the relationship of the interference imposed on the second cell by the first cell. For example, by means of terminal measurement, the second cells know that the cell 1 in the second cells not only is interfered by intra-frequency second cells, but also is interfered by intra-frequency first cells with different strength. The first cell generating strong interference includes the first cell numbered {1}, with measured signal strength of [-30dBm, -70dBm]. The first cells generating secondary strong interference include the first cells numbered {4, 7, 10, 13, 16, 19, and 22}, with measured signal strength of [-85dBm, -95dBm]. The first cells generating weak interference include the first cells numbered {27, 34, 37, 40, 43, 46, and 47}, with measured signal strength of [-100dBm, -110dBm].

In the apparatus for interference coordination in an inter-RAT system illustrated in FIG. 4 to FIG. 6, the information about the time-frequency resource of the first cell includes at least any piece of information about a carrier of the first cell, information about a power of the carrier, information about a timeslot, and information about a power in the timeslot. For example, according to a change of a service of a G-only user, the base station of the first cell correspondingly adds or reduces the quantity of GSM service carrier, or adjusts a power value of a carrier, and the base station of the first cell may send the information about the carrier of the first cell and/or the information about the power of the carrier to the base station of the second cell or the multi-system controller. When information about timeslot allocation of the first cell and the power in the timeslot change because of the service change, the base station of the first cell may also send the information about the timeslot and the information about the power in the timeslot, as the information about the time-frequency resource of the first cell, to the base station of the second cell or the multi-system controller.

As mentioned above, acquiring the information about the interference relationship between the first cell and the second cell includes preliminarily determining the information about the interference relationship, and precisely determining the information about the interference relationship. When the information about the interference relationship is determined preliminarily, it is optional that only the strong interference source cells and secondary strong interference source cells are considered, or only interference source cells in which measured signal strength is greater than a threshold are considered. In this example, only the strong interference source cells and secondary strong interference source cells are considered. Through summarization, the multi-standard controller obtains occupancy of a carrier by each cell in the second cells shown in FIG. 3.

A method 1 for precisely determining the information about the interference relationship between the first cell and the second cell by the determining module 402 is obtaining a path loss coefficient based on the geographical locations of the first cell and the second cell, and obtaining the information about the interference relationship between the first cell and the second cell with reference to the information about the carrier and/or the information about the power of the carrier in the first cell. Specifically, assuming that distances from GSM cells 1, ..., N to an LTE cell are d1, ..., dN respectively, and that transmit powers are p1, ..., pN respectively, strength of interference that may be imposed on the LTE on fi may be expressed by using the following formula:

$$I(f_i) = \sum_{j=1}^{N} A_j(f_i) p_j L_j$$

(1)

where, $A_j(f_i)$ indicates occupancy of a carrier fi by a cell numbered j in the first cells. If the first cell j occupies the carrier fi, $A_j(f_i) = 1$; otherwise, $A_j(f_i) = 0$. $L_j$ indicates a path loss from the first cell numbered j to the second cell, and the path loss may be estimated appropriately according to the distance between the two cells, for example, $L_j = d^{-\alpha}{}_j$, where $\alpha$ is a path loss coefficient, ranging from -2 to -4. According to the foregoing description, if only the cell numbered 1 in the first cells, namely, the strong interference source cell, is considered, and only the cells numbered 4, 7, 10, 13, 16, 19, and 22 in the first cells, namely, the secondary strong interference source cells, are considered, strength of interference to the second cell on f1, f2, f3, and f4 is respectively as follows:

$$I(f_1) = p_1 L_1 + p_4 L_4 + p_{10} L_{10} + p_{13} L_{13} + p_{16} L_{16} + p_{22} L_{22}$$

$$I(f_2) = p_1 L_1 + p_7 L_7 + p_{10} L_{10} + p_{19} L_{19}$$

$$I(f_3) = p_4 L_4 + p_{10} L_{10} + p_{13} L_{13} + p_{19} L_{19} + p_{22} L_{22}$$

$$I(f_4) = p_1 L_1 + p_{16} L_{16} + p_{19} L_{19}$$.

According to the method in the foregoing example, the strength of interference to the second cell on each carrier may be determined finally.

A method 2 for precisely determining the information about the interference relationship between the first cell and the second cell by the determining module 402 is obtaining a path loss coefficient based on the geographical locations of the first cell and the second cell, and setting weights for interference source cells of different interference strength with reference to the information about the carrier and/or the information about the power of the carrier in the first cell. When only the strong interference source cells and the secondary strong interference source cells are considered, different weights are assigned to the strong interference source cells and the secondary strong interference source cells. For example, a weight of the cell numbered 1 in the first cells is 0.3, and all weights of the cells numbered 4, 7, 10, 13, 16, 19, and 22 are 0.1 (certainly, the coefficients may vary according to actual situations), and therefore strength of interference that may be imposed on the second cell on $f_1$ may be expressed by using the following formula:

$$I(f_i) = \sum_{j=1}^{N} A_j(f_i) p_j \eta_j$$

(2)

where, $\eta_j$ is a weight of the GSM cell j, and the strength of interference to the second cell on each carrier may be determined finally.

In the foregoing method 1 and method 2, when only the information about the carrier of the first cell is received, formula (1) and formula (2) may be simplified as follows:

$$I(f_i) = \sum_{j=1}^{N} A_j(f_i) p_j L_j \quad \underline{\qquad\qquad>} \quad I(f_i) = \sum_{j=1}^{N} A_j(f_i) L_j$$

$$I(f_i) = \sum_{j=1}^{N} A_j(f_i) p_j \eta_j \quad \underline{\qquad\qquad>} \quad I(f_i) = \sum_{j=1}^{N} A_j(f_i) \eta_j$$.

A method 3 for precisely determining the information about the interference relationship between the first cell and the second cell by the determining module 402 is obtaining a path loss coefficient based on the geographical locations of the first cell and the second cell, and calculating, with reference to the information about the timeslot and/or the information about the power in the timeslot in the first cell and according to the following formula (3), strength of interference imposed on the second cell by the first cell on the time-frequency resource (particular carrier and particular timeslot).

$$I(f_i, slot_k) = \sum_{j=1}^{N} A_j(f_i, k) p_j(i, k) L_j \qquad (3)$$

where, $I(f_i, slot_k)$ indicates strength of interference imposed on the second cell by the first cell in a timeslot K on a carrier fi, $pj(i,k)$ indicates a transmit power of the cell $j$ in the timeslot k on the carrier fi, and $A_j(f_i, k) = 1$ indicates that the cell j occupies the timeslot k on the carrier i, or $A_j(f_i, k) = 0$ indicates that the cell j does not occupy the timeslot k on the carrier i.

When the acquired information about time-frequency resource of the first cell is the information about the carrier of the first cell, the information about the power of the carrier, and the information about the timeslot, and the information about the interference relationship is information about received signal strength obtained by means of terminal measurement, strength of interference imposed on the second cell by the first cell on the time-frequency resource (particular carrier and particular timeslot) may be calculated by the determining module 402 by using the following formula (4).

$$I(f_i, slot_k) = \sum_{j=1}^{N} A_j(f_i, k) p_j(i, k) \eta_j \qquad (4)$$

When the acquired information about the time-frequency resource of the first cell is the information about the timeslot and the information about the transmit power, and the information about the interference relationship is information about a path loss obtained according to the geographical location information, strength of interference imposed on the second cell by the first cell on the time-frequency resource (particular timeslot) may be calculated by the determining module 402 by using the following formula (5).

$$I(slot_k) = \sum_{j=1}^{N} C_j(k) p_j(k) L_j \qquad (5)$$

where, $C_j(k) = 1$ indicates that the cell $j$ occupies the timeslot $k$, or $C_j(k) = 0$ indicates that the cell $j$ does not occupy the timeslot k. $p_j(k)$ indicates a transmit power of the cell numbered $j$ in the first cells, in the timeslot $k$, that is, by default, transmit powers of the first cell $j$ on all carriers are the same.

When the acquired information about time-frequency resource of the first cell is the information about the timeslot and the information about the transmit power, and the information about the interference relationship is information about received signal strength obtained by means of terminal measurement, strength of interference imposed on the second cell by the first cell on the time-frequency resource (particular timeslot) may be calculated by the determining module 402 by using the following formula (6).

$$I(slot_k) = \sum_{j=1}^{N} C_j(k) p_j(k) \eta_j \qquad (6)$$

When the acquired information about time-frequency resource of the first cell is the information about the timeslot, and the information about the interference relationship is information about a path loss obtained according to the geographical location information, strength of interference imposed on the second cell by the first cell on the time-frequency resource (particular timeslot) may be calculated by the determining module 402 by using the following formula (7).

$$I(slot_k) = \sum_{j=1}^{N} C_j(k)L_j \qquad (7)$$

When the acquired information about time-frequency resource of the first cell is the information about the timeslot, and the information about the interference relationship is information about received signal strength obtained by means of UE measurement, strength of interference imposed on the second cell by the first cell on the time-frequency resource (particular timeslot) may be calculated by the determining module 402 by using the following formula (8).

$$I(slot_k) = \sum_{j=1}^{N} C_j(k)\eta_j \qquad (8)$$

After the information about the interference relationship is calculated according to the foregoing method, because the carrier of the first cell has a correspondence with a resource block (Resource Block, RB) of the second cell, the multi-standard controller may determine the information about the time-frequency resource of the second cell accordingly, which specifically includes determining an available time-frequency resource or an unavailable time-frequency resource of the second cell or information about strength of interference imposed on the time-frequency resource of the second cell. For example, when an RB that is correspondingly interfered in the second cell is obtained according to a carrier generating interference, an available time-frequency resource of the second cell, namely, an RB that is not interfered, may be determined accordingly. The multi-standard controller may send the information about the time-frequency resource of the second cell to the base station of the second cell, so that the second cell uses the information about the time-frequency resource of the second cell to schedule a time-frequency resource. That is, as shown in FIG. 7, which shows an apparatus for interference coordination in an inter-RAT system according to another embodiment of the present invention, the apparatus for interference coordination in an inter-RAT system illustrated in FIG. 4 may further include a sending module 701, where the sending module 701 is configured to send the information about the time-frequency resource of the second cell to the base station of the second cell. The information about the time-frequency resource of the second cell is used by the second cell to schedule a time-frequency resource. For example, the interfered RB is avoided during scheduling, or lower-order scheduling is performed. When sending the information about the time-frequency resource of the second cell, the sending module 701 may send the information about the time-frequency resource of the second cell and the information about the strength of the interference to the second cell to the base station of the second cell, where the information about the strength of the interference may be quantitative information obtained through calculation according to the foregoing formula, or may be qualitative information that is obtained through comparison with the threshold after a piece of quantitative information is calculated according to the foregoing formula, for example, strong interference and secondary strong interference. In an embodiment corresponding to the foregoing embodiment, assuming that the second cell is strongly interfered on resource blocks numbered RB4, RB5, and RB29 and corresponding timeslots SFN0 to SFN40, and that the second cell is secondarily strongly interfered on resource blocks numbered RB30, RB14, and RB46, and corresponding timeslots SFN12 to SFN54, the sending module 701 in the multi-standard controller may send the information about the time-frequency resource of the second cell in forms of {SFN0 to SFN40, RB4, RB5, RB29, strong interference} and {SFN12 to SFN54, RB30, RB14, RB46, secondary strong interference} to the base station of the second cell.

In particular, that the information about the time-frequency resource of the second cell is used by the second cell to schedule a time-frequency resource may be that the information about the time-frequency resource of the second cell is specifically used to instruct the second cell to use a first carrier of the second cell to schedule a second carrier of the second cell in a cross-carrier manner, where the second carrier includes a time-frequency resource shared by the first cell and the second cell.

According to an aspect, an embodiment of the present invention further provides a multi-standard controller or a base station, for example, a base station using an LTE RAT. The multi-standard controller or base station includes a memory and one or more programs, where the one or more programs are stored in the memory, and one or more processors are configured to execute instructions included in the one or more programs, so as to perform the following operations: acquiring information about a time-frequency resource of a first cell and information about an interference relationship between the first cell and the second cell, where the information about the interference relationship between the first cell and the second cell is used to determine interference imposed on the second cell by the first cell on a time-frequency, and the first cell and the second cell are cells of different RATs; and determining information about a time-frequency resource of the second cell according to the information about the time-frequency resource of the first cell and the information about the interference relationship, where the information about the time-frequency resource of the second cell is used by the second cell to schedule a time-frequency resource.

Based on the foregoing aspect, in a first possible implementation manner of this aspect, the memory of the multi-standard controller or base station further includes an instruction for executing the following operation: receiving the information about the time-frequency resource of the first cell, where the information about the time-frequency resource of the first cell is sent by a base station of the first cell.

Assuming that the foregoing is a first possible implementation manner, in a third possible implementation manner provided on a basis of the first possible implementation manner, the memory of the multi-standard controller or base station further includes an instruction for executing the following operation: receiving the information about the interference relationship, where the information about the interference relationship is sent by a base station of the second cell.

In a fourth possible implementation manner provided on a basis of the first, second, or third possible implementation manner, the information about the time-frequency resource of the first cell includes at least any piece of information about a carrier of the first cell, information about a power of the carrier, information about a timeslot, and information about a power in the timeslot.

In a fifth possible implementation manner provided on a basis of the first, second, or third possible implementation manner, the information about the interference relationship between the first cell and the second cell includes at least information about the interference imposed on the second cell by the first cell.

In a sixth possible implementation manner provided on a basis of the first, second, or third possible implementation manner, the memory of the multi-standard controller or base station further includes an instruction for executing the following operation: determining an available time-frequency resource or an unavailable time-frequency resource of the second cell or information about strength of interference imposed on the time-frequency resource of the second cell.

Assuming that the foregoing is a first possible implementation manner, in a seventh possible implementation manner provided on a basis of the first possible implementation manner, the information about the time-frequency resource of the second cell is specifically used to instruct the second cell to use a first carrier of the second cell to schedule a second carrier of the second cell in a cross-carrier manner, where the second carrier includes a time-frequency resource shared by the first cell and the second cell.

In a eighth possible implementation manner provided on a basis of a first possible implementation manner, the memory of the multi-standard controller or base station further includes an instruction for executing the following operation: sending the information about the time-frequency resource of the second cell to a base station of the second cell.

According to another aspect, another embodiment of the present invention further provides a computer-readable storage medium, where the computer-readable storage medium may be a computer-readable storage medium included in the memory in the foregoing embodiment, or may be a computer-readable storage medium that exists alone and is not assembled into a terminal. The computer-readable storage medium stores one or more programs, and the one or more programs are used by one or more processors to execute a method for interference coordination in an inter-RAT system, where the method includes:

acquiring information about a time-frequency resource of a first cell and information about an interference relationship between the first cell and the second cell, where the information about the interference relationship between the first cell and the second cell is used to determine interference imposed on the second cell by the first cell on a time-frequency, and the first cell and the second cell are cells of different RATs; and determining information about a time-frequency resource of the second cell according to the information about the time-frequency resource of the first cell and the information about the interference relationship, where the information about the time-frequency resource of the second cell is used by the second cell to schedule a time-frequency resource.

Based on the foregoing aspect, in a first possible implementation manner of this aspect,, the acquiring information about a time-frequency resource of the first cell includes: receiving the information about the time-frequency resource of the first cell, where the information about the time-frequency resource of the first cell is sent by a base station of the first cell.

Assuming that the foregoing is a first possible implementation manner, in a third possible implementation manner provided on a basis of the first possible implementation manner, the acquiring information about an interference relationship between the first cell and the second cell includes: receiving the information about the interference relationship, where the information about the interference relationship is sent by a base station of the second cell.

In a fourth possible implementation manner provided on a basis of the first, second, or third possible implementation manner, the information about the time-frequency resource of the first cell includes at least any piece of information about a carrier of the first cell, information about a power of the carrier, information about a timeslot, and information about a power in the timeslot.

In a fifth possible implementation manner provided on a basis of the first, second, or third possible implementation manner, the information about the interference relationship between the first cell and the second cell includes at least information about the interference imposed on the second cell by the first cell.

In a sixth possible implementation manner provided on a basis of the first, second, or third possible implementation manner, the determining information about a time-frequency resource of the second cell according to the information about the time-frequency resource of the first cell and the information about the interference relationship includes: determining an available time-frequency resource or an unavailable time-frequency resource of the second cell or information about strength of interference imposed on the time-frequency resource of the second cell.

In a seventh possible implementation manner provided on a basis of a first possible implementation manner, the information about the time-frequency resource of the second cell is specifically used to instruct the second cell to use a first carrier of the second cell to schedule a second carrier of the second cell in a cross-carrier manner, where the second carrier includes a time-frequency resource shared by the first cell and the second cell.

Assuming that the foregoing is a first possible implementation manner, in an eighth possible implementation manner provided on a basis of the first possible implementation manner, the method further includes: sending the information about the time-frequency resource of the second cell to a base station of the second cell.

It should be noted that content such as information exchange between the modules/units of the apparatus and the execution processes thereof is based on the same idea as the method embodiments of the present invention, and produces the same technical effects as the method embodiments of the present invention. For the specific content, refer to the description in the method embodiments of the present invention, and the details are not described herein again.

A person of ordinary skill in the art may understand that all or some of the steps of the methods in the embodiments may be implemented by a program instructing related hardware. The program may be stored in a computer readable storage medium. The storage medium may include: a read-only memory (Read-Only Memory, ROM), a random access memory (Random Access Memory, RAM), a magnetic disk, or an optical disc.

The method, apparatus, and device for interference coordination in an inter-RAT system according to the embodiments of the present invention are described in detail above. In this specification, specific examples are used to describe the principle and implementation manners of the present invention, and the description of the embodiments is only intended to help understand the method and core idea of the present invention. Moreover, a person of ordinary skill in the art may, based on the idea of the present invention, make modifications with respect to the specific implementation manners and the application scope. Therefore, the content of this specification shall not be construed as a limitation to the present invention.

**Claims**

1. A method for interference coordination in an inter-radio access technology, RAT, system, comprising:

   acquiring (101) information about a time-frequency resource of a first cell and information about an interference relationship between the first cell and a second cell, wherein the information about the interference relationship between the first cell and the second cell is used to determine interference imposed on the second cell by the first cell, and the first cell and the second cell are cells of different RATs; the method being **characterized by** determining (102) information about a time-frequency resource of the second cell according to the information about the time-frequency resource of the first cell and the information about the interference relationship, wherein the information about the time-frequency resource of the second cell is used by the second cell to schedule a time-frequency resource, wherein the information about the time-frequency resource of the second cell being specifically used to instruct the second cell to use a first carrier of the second cell to schedule a second carrier of the second cell in a cross-carrier manner, wherein the second carrier comprises a time-frequency resource shared by the first cell and the second cell.

2. The method according to claim 1, wherein the acquiring (101) information about the time-frequency resource of the first cell comprises: receiving the information about the time-frequency resource of the first cell, wherein the information about the time-frequency resource of the first cell is sent by a base station of the first cell.

3. The method according to claim 1, wherein the acquiring (101) information about the interference relationship between the first cell and the second cell comprises:

   receiving the information about the interference relationship, wherein the information about the interference relationship is sent by a base station of the second cell.

4. The method according to any one of claims 1 to 3, wherein the information about the time-frequency resource of the first cell comprises at least any piece of information about a carrier of the first cell, information about a power of the carrier, information about a timeslot, and information about a power in the timeslot.

5. The method according to any one of claims 1 to 3, wherein the information about the interference relationship between the first cell and the second cell comprises at least information about the interference imposed on the second cell by the first cell.

6. The method according to any one of claims 1 to 3, wherein the determining (102) information about the time-frequency resource of the second cell according to the information about the time-frequency resource of the first cell and the information about the interference relationship comprises:

   determining an available time-frequency resource or an unavailable time-frequency resource of the second cell or information about strength of interference imposed on the time-frequency resource of the second cell.

7. An apparatus for interference coordination in an inter-radio access technology, RAT, system, wherein the apparatus comprises:

   an acquiring module (401), configured to acquire information about a time-frequency resource of a first cell and information about an interference relationship between the first cell and a second cell, wherein the information about the interference relationship between the first cell and the second cell is used to determine interference imposed on the second cell by the first cell, and the first cell and the second cell are cells of different RATs; the apparatus being **characterized by** a determining module (402), configured to determine information about a time-frequency resource of the second cell according to the information about the time-frequency resource of the first cell and the information about the interference relationship, wherein the information about the time-frequency resource of the second cell is used by the second cell to schedule a time-frequency resource, wherein the information about the time-frequency resource of the second cell being specifically used to instruct the second cell to use a first carrier of the second cell to schedule a second carrier of the second cell in a cross-carrier manner, wherein the second carrier comprises a time-frequency resource shared by the first cell and the second cell.

8. The apparatus according to claim 7, wherein the acquiring module (401) comprises:

   a first receiving unit, configured to receive the information about the time-frequency resource of the first cell, wherein the information about the time-frequency resource of the first cell is sent by a base station of the first cell.

9. The apparatus according to claim 7, wherein the acquiring module (402) comprises:

   a second receiving unit, configured to receive the information about the interference relationship, wherein the information about the interference relationship is sent by a base station of the second cell.

10. The apparatus according to any one of claims 7 to 9, wherein the information about the time-frequency resource of the first cell comprises at least any piece of information about a carrier of the first cell, information about a power of the carrier, information about a timeslot, and information about a power in the timeslot.

11. The apparatus according to any one of claims 7 to 9, wherein the information about the interference relationship between the first cell and the second cell comprises at least information about the interference imposed on the second cell by the first cell.

12. The apparatus according to any one of claims 7 to 9, wherein the determining module (402) is specifically configured to determine an available time-frequency resource or an unavailable time-frequency resource of the second cell or information about strength of interference imposed on the time-frequency resource of the second cell.

13. The apparatus according to any one of claims 7-12, wherein the apparatus is a multi-standard controller or a base station of the second cell.

**Patentansprüche**

1. Verfahren zur Interferenzkoordinierung in einem "Inter-Radio-Access-Technology(RAT)"-System, das Folgendes umfasst:

Erfassen (101) von Informationen zu einer Zeit-Frequenz-Ressource einer ersten Zelle und von Informationen zu einer Interferenzbeziehung zwischen der ersten Zelle und einer zweiten Zelle, wobei die Informationen zur Interferenzbeziehung zwischen der ersten Zelle und der zweiten Zelle zum Bestimmen einer Interferenz, mit der die zweite Zelle von der ersten Zelle überlagert wird, genutzt werden und die erste Zelle und die zweite Zelle Zellen mit unterschiedlichen RATs sind;
wobei das Verfahren durch Folgendes gekennzeichnet ist:

Bestimmen (102) von Informationen zu einer Zeit-Frequenz-Ressource der zweiten Zelle gemäß den Informationen zur Zeit-Frequenz-Ressource der ersten Zelle und den Informationen zur Interferenzbeziehung, wobei die Informationen zur Zeit-Frequenz-Ressource der zweiten Zelle von der zweiten Zelle zum zeitlichen Steuern einer Zeit-Frequenz-Ressource genutzt werden,
wobei die Informationen zur Zeit-Frequenz-Ressource der zweiten Zelle speziell zum Anweisen der zweiten Zelle zum Nutzen eines ersten Trägers der zweiten Zelle zum zeitlichen Steuern eines zweiten Trägers der zweiten Zelle in trägerübergreifender Weise genutzt werden, wobei der zweite Träger eine von der ersten Zelle und der zweiten Zelle gemeinsam verwendete Zeit-Frequenz-Ressource umfasst.

2.  Verfahren nach Anspruch 1, wobei das Erfassen (101) von Informationen zur Zeit-Frequenz-Ressource der ersten Zelle Folgendes umfasst: Empfangen der Informationen zur Zeit-Frequenz-Ressource der ersten Zelle, wobei die Informationen zur Zeit-Frequenz-Ressource der ersten Zelle von einer Basisstation der ersten Zelle gesendet werden.

3.  Verfahren nach Anspruch 1, wobei das Erfassen (101) von Informationen zur Interferenzbeziehung zwischen der ersten Zelle und der zweiten Zelle Folgendes umfasst:

Empfangen der Informationen zur Interferenzbeziehung, wobei die Informationen zur Interferenzbeziehung von einer Basisstation der zweiten Zelle gesendet werden.

4.  Verfahren nach einem der Ansprüche 1 bis 3, wobei die Informationen zur Zeit-Frequenz-Ressource der ersten Zelle mindestens irgendeine Information von Informationen zu einem Träger der ersten Zelle, Informationen zu einer Leistung des Trägers, Informationen zu einem Zeitschlitz und Informationen zu einer Leistung in dem Zeitschlitz umfassen.

5.  Verfahren nach einem der Ansprüche 1 bis 3, wobei die Informationen zur Interferenzbeziehung zwischen der ersten Zelle und der zweiten Zelle mindestens Informationen zur Interferenz, mit der die zweite Zelle von der ersten Zelle überlagert wird, umfassen.

6.  Verfahren nach einem der Ansprüche 1 bis 3, wobei das Bestimmen (102) von Informationen zur Zeit-Frequenz-Ressource der zweiten Zelle gemäß den Informationen zur Zeit-Frequenz-Ressource der ersten Zelle und den Informationen zur Interferenzbeziehung Folgendes umfasst:

Bestimmen einer verfügbaren Zeit-Frequenz-Ressource oder einer nicht verfügbaren Zeit-Frequenz-Ressource der zweiten Zelle oder von Informationen zur Stärke der Interferenz, mit der die Zeit-Frequenz-Ressource der zweiten Zelle überlagert wird.

7.  Vorrichtung zur Interferenzkoordinierung in einem "Inter-Radio-Access-Technology(RAT)"-System, wobei die Vorrichtung Folgendes umfasst:

ein Erfassungsmodul (401), das konfiguriert ist, um Informationen zu einer Zeit-Frequenz-Ressource einer ersten Zelle und Informationen zu einer Interferenzbeziehung zwischen der ersten Zelle und einer zweiten Zelle zu erfassen, wobei die Informationen zur Interferenzbeziehung zwischen der ersten Zelle und der zweiten Zelle zum Bestimmen einer Interferenz, mit der die zweite Zelle von der ersten Zelle überlagert wird, genutzt werden und die erste Zelle und die zweite Zelle Zellen mit unterschiedlichen RATs sind;
wobei die Vorrichtung durch Folgendes gekennzeichnet ist:

ein Bestimmungsmodul (402), das konfiguriert ist, um Informationen zu einer Zeit-Frequenz-Ressource der zweiten Zelle gemäß den Informationen zur Zeit-Frequenz-Ressource der ersten Zelle und den Informationen zur Interferenzbeziehung zu bestimmen, wobei die Informationen zur Zeit-Frequenz-Ressource der zweiten Zelle von der zweiten Zelle zum zeitlichen Steuern einer Zeit-Frequenz-Ressource genutzt werden, wobei die Informationen zur Zeit-Frequenz-Ressource der zweiten Zelle speziell zum Anweisen der zweiten Zelle zum Nutzen eines ersten Trägers der zweiten Zelle zum zeitlichen Steuern eines zweiten Trägers der zweiten Zelle in trägerübergreifender Weise genutzt werden, wobei der zweite Träger eine von der ersten Zelle und der zweiten Zelle gemeinsam verwendete Zeit-Frequenz-Ressource umfasst.

8. Vorrichtung nach Anspruch 7, wobei das Erfassungsmodul (401) Folgendes umfasst:

eine erste Empfangseinheit, die konfiguriert ist, um die Informationen zur Zeit-Frequenz-Ressource der ersten Zelle zu empfangen, wobei die Informationen zur Zeit-Frequenz-Ressource der ersten Zelle von einer Basisstation der ersten Zelle gesendet werden.

9. Vorrichtung nach Anspruch 7, wobei das Erfassungsmodul (402) Folgendes umfasst:

eine zweite Empfangseinheit, die konfiguriert ist, um die Informationen zur Interferenzbeziehung zu empfangen, wobei die Informationen zur Interferenzbeziehung von einer Basisstation der zweiten Zelle gesendet werden.

10. Vorrichtung nach einem der Ansprüche 7 bis 9, wobei die Informationen zur Zeit-Frequenz-Ressource der ersten Zelle mindestens irgendeine Information von Informationen zu einem Träger der ersten Zelle, Informationen zu einer Leistung des Trägers, Informationen zu einem Zeitschlitz und Informationen zu einer Leistung in dem Zeitschlitz umfassen.

11. Vorrichtung nach einem der Ansprüche 7 bis 9, wobei die Informationen zur Interferenzbeziehung zwischen der ersten Zelle und der zweiten Zelle mindestens Informationen zur Interferenz, mit der die zweite Zelle von der ersten Zelle überlagert wird, umfassen.

12. Vorrichtung nach einem der Ansprüche 7 bis 9, wobei das Bestimmungsmodul (402) speziell konfiguriert ist, um eine verfügbare Zeit-Frequenz-Ressource oder eine nicht verfügbare Zeit-Frequenz-Ressource der zweiten Zelle oder Informationen zur Stärke der Interferenz, mit der die Zeit-Frequenz-Ressource der zweiten Zelle überlagert wird, zu bestimmen.

13. Vorrichtung nach einem der Ansprüche 7-12, wobei die Vorrichtung ein Multistandardcontroller oder eine Basisstation der zweiten Zelle ist.

## Revendications

1. Procédé de coordination de brouillage dans un système de technologie d'accès inter-radio, RAT, comprenant les étapes consistant à :

acquérir (101) des informations concernant une ressource temps-fréquence d'une première cellule et des informations concernant un rapport de brouillage entre la première cellule et une seconde cellule, dans lequel les informations concernant le rapport de brouillage entre la première cellule et la seconde cellule sont utilisées pour déterminer un brouillage imposé sur la seconde cellule par la première cellule, et la première cellule et la seconde cellule sont des cellules de RAT différentes ; le procédé étant **caractérisé par** les étapes consistant à :

déterminer (102) des informations concernant une ressource temps-fréquence de la seconde cellule en fonction des informations concernant la ressource temps-fréquence de la première cellule et des informations concernant le rapport de brouillage, dans lequel les informations concernant la ressource temps-fréquence de la seconde cellule sont utilisées par la seconde cellule pour programmer une ressource temps-fréquence,
dans lequel les informations concernant la ressource temps-fréquence de la seconde cellule sont utilisées spécifiquement pour donner instruction à la seconde cellule d'utiliser une première porteuse de la seconde cellule pour programmer une seconde porteuse de la seconde cellule en mode inter-porteuse, dans lequel la seconde porteuse comprend une ressource temps-fréquence partagée par la première cellule et la seconde cellule.

**2.** Procédé selon la revendication 1, dans lequel l'acquisition (101) d'informations concernant la ressource temps-fréquence de la première cellule consiste à : recevoir les informations concernant la ressource temps-fréquence de la première cellule, dans lequel les informations concernant la ressource temps-fréquence de la première cellule sont envoyées par une station de base de la première cellule.

**3.** Procédé selon la revendication 1, dans lequel l'acquisition (101) d'informations concernant le rapport de brouillage entre la première cellule et la seconde cellule consiste à :

recevoir les informations concernant le rapport de brouillage, dans lequel les informations concernant le rapport de brouillage sont envoyées par une station de base de la seconde cellule.

**4.** Procédé selon l'une quelconque des revendications 1 à 3, dans lequel les informations concernant la ressource temps-fréquence de la première cellule comprennent au moins un élément d'informations concernant une porteuse de la première cellule, des informations concernant une puissance de la porteuse, des informations concernant un intervalle de temps, et des informations concernant une puissance dans l'intervalle de temps.

**5.** Procédé selon l'une quelconque des revendications 1 à 3, dans lequel les informations concernant le rapport de brouillage entre la première cellule et la seconde cellule comprennent au moins des informations concernant le brouillage imposé sur la seconde cellule par la première cellule.

**6.** Procédé selon l'une quelconque des revendications 1 à 3, dans lequel la détermination (102) des informations concernant la ressource temps-fréquence de la seconde cellule en fonction des informations concernant la ressource temps-fréquence de la première cellule et des informations concernant le rapport de brouillage consiste à :

déterminer une ressource temps-fréquence disponible ou une ressource temps-fréquence indisponible de la seconde cellule ou des informations concernant l'intensité de brouillage imposé sur la ressource temps-fréquence de la seconde cellule.

**7.** Appareil de coordination de brouillage dans un système de technologie d'accès inter-radio, RAT, dans lequel l'appareil comprend :

un module d'acquisition (401), conçu pour acquérir des informations concernant une ressource temps-fréquence d'une première cellule et des informations concernant un rapport de brouillage entre la première cellule et une seconde cellule, dans lequel les informations concernant le rapport de brouillage entre la première cellule et la seconde cellule sont utilisées pour déterminer un brouillage imposé sur la seconde cellule par la première cellule, et la première cellule et la seconde cellule sont des cellules de RAT différentes ; l'appareil étant **caractérisé par** :

un module de détermination (402), conçu pour déterminer des informations concernant une ressource temps-fréquence de la seconde cellule en fonction des informations concernant la ressource temps-fréquence de la première cellule et des informations concernant le rapport de brouillage, dans lequel les informations concernant la ressource temps-fréquence de la seconde cellule sont utilisées par la seconde cellule pour programmer une ressource temps-fréquence,
dans lequel les informations concernant la ressource temps-fréquence de la seconde cellule sont utilisées spécifiquement pour donner instruction à la seconde cellule d'utiliser une première porteuse de la seconde cellule pour programmer une seconde porteuse de la seconde cellule en mode inter-porteuse, dans lequel la seconde porteuse comprend une ressource temps-fréquence partagée par la première cellule et la seconde cellule.

**8.** Appareil selon la revendication 7, dans lequel le module d'acquisition (401) comprend :

une première unité de réception, conçue pour recevoir les informations concernant la ressource temps-fréquence de la première cellule, dans lequel les informations concernant la ressource temps-fréquence de la première cellule sont envoyées par une station de base de la première cellule.

**9.** Appareil selon la revendication 7, dans lequel le module d'acquisition (402) comprend :

une seconde unité de réception, conçue pour recevoir les informations concernant le rapport de brouillage, dans lequel les informations concernant le rapport de brouillage sont envoyées par une station de base de la seconde cellule.

10. Appareil selon l'une quelconque des revendications 7 à 9, dans lequel les informations concernant la ressource temps-fréquence de la première cellule comprennent au moins un élément d'informations concernant une porteuse de la première cellule, des informations concernant une puissance de la porteuse, des informations concernant un intervalle de temps, des informations concernant une puissance dans l'intervalle de temps.

11. Appareil selon l'une quelconque des revendications 7 à 9, dans lequel les informations concernant le rapport de brouillage entre la première cellule et la seconde cellule comprennent au moins des informations concernant le brouillage imposé sur la seconde cellule par la première cellule.

12. Appareil selon l'une quelconque des revendications 7 à 9, dans lequel le module de détermination (402) est conçu spécifiquement pour déterminer une ressource temps-fréquence disponible ou une ressource temps-fréquence indisponible de la seconde cellule ou des informations concernant l'intensité de brouillage imposé sur la ressource temps-fréquence de la seconde cellule.

13. Appareil selon l'une quelconque des revendications 7 à 12, dans lequel l'appareil est un contrôleur multistandard ou une station de base de la seconde cellule.

Acquire information about a time-frequency resource of a first cell and information about an interference relationship between the first cell and the second cell, where the information about the interference relationship between the first cell and the second cell is used to determine interference from the first cell to the second cell on a time-frequency, and the first cell and the second cell have different radio access technologies

S101

Determine information about a time-frequency resource of the second cell according to the information about the time-frequency resource of the first cell and the information about the interference relationship, where the information about the time-frequency resource of the second cell is used by the second cell to schedule a time-frequency resource

S102

FIG. 1

FIG. 2

Carrier f1 occupied by cells 1, 4, 10, 13, 16, and 22 in first cells

Carrier f2 occupied by cells 1, 7, 10, and 19 in first cells

Carrier f3 occupied by cells 4, 10, 13, 19, and 22 in first cells

Carrier f4 occupied by cells 1, 16, and 19 in first cells

FIG. 3

— 401

Acquiring module

— 402

Determining module

FIG. 4

— 401

Acquiring module

— 501

First receiving unit

— 402

Determining module

FIG. 5

401

Acquiring module

601

Second
receiving unit

402

Determining
module

FIG. 6

401

Acquiring
module

402

Determining
module

701

Sending module

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101977388 A